# EUROPEAN PATENT APPLICATION

(11) **EP 4 667 282 A1**
(43) Date of publication of application: **24.12.2025**
(21) Application number: 25183768.8
(22) Date of filing: 18.06.2025
(51) Int. Cl.: B60N 2/24, B60N 2/68

(54) **LOAD-BEARING STRUCTURE OF A SEAT FOR ROAD-RAIL VEHICLES FOR PUBLIC TRANSPORT, AND METHOD FOR MANUFACTURING IT**

(30) Priority: 19.06.2024 IT 202400014131
(71) Applicant: F.I.S.A. - Fabbrica Italiana Sedili Autoferroviari - S.r.l., 33010 Rivoli di Osoppo (UD) (IT)
(72) Inventor: De Simon, Davide, 33100 Udine (IT)
(74) Representative: Petraz, Gilberto Luigi

(57) **Abstract**

A load-bearing structure (10) for a seat, in particular for passengers, for road-rail vehicles for public transport, wherein the load-bearing structure (10) comprises a rigid body (11) made by molding a metal sheet, so that it comprises both a lower part (12), which during use is substantially horizontal and is configured to support a seat bottom of the seat, and also an upper part (15) inclined by a certain right or obtuse angle with respect to the lower part (12), and also two lateral flanks (17, 19), which define an internal recess (22). A plurality of reinforcing elements (27), also metallic, preferably made of steel, are attached to the body (11) inside the recess (22).

## Description

### FIELD OF THE INVENTION

The present invention concerns a load-bearing structure of a seat, in particular for passengers, for road-rail vehicles for public transport, whether by road or rail, such as for example railway carriages, buses, or similar vehicles, and a method for manufacturing it. In the present description, the aforementioned load-bearing structure is also defined as a shell.

### BACKGROUND OF THE INVENTION

In the sector of seats for road-rail vehicles for public transport, several load-bearing structures, or shells, are known, mostly rigid, configured to safely support both the parts that make up the seat, such as a seat bottom cushion, a padded backrest, any armrests and a headrest, as well as the possibly significant mass of a person, which can sometimes exceed 100 kg.

These known load-bearing structures can be made of different materials, either metallic, such as iron, steel and aluminum, or composite, such as carbon fibers impregnated with thermosetting resin, and they can have anatomical shapes so as to define a substantially horizontal base, which acts as or supports a seat bottom, and a rear part, substantially vertical or inclined backward with respect to a vertical plane, which acts as or supports a backrest.

In particular, a shell for a seat is known which consists of a concave metal outer covering having a first part that defines the seat bottom plane and a second part defining the rest plane, or backrest, of the seat. To achieve greater rigidity, the outer covering comprises a rib that has the same concavity as it, and reinforcing plates, also metallic, are attached and screwed onto it.

This known shell has the disadvantage of being very heavy, complex to make and expensive.

A shell for seats of road-rail vehicles for public transport is also known, which was previously made by the same Applicant by shaping a metal sheet through molding in order to achieve an anatomically shaped rigid body having a lower part to house a seat bottom and an inclined upper part to house a backrest. In order to reinforce the rigid body, a suitably shaped metal reinforcing bar was then attached inside each of its two lateral flanks, using a plurality of screws.

Despite being robust, this known shell by the Applicant, however, has the disadvantage of comprising several metal components that need to be mechanically coupled together, and therefore requires a step of mechanical assembly of the same components, thus increasing the work times and therefore the work costs and, consequently, the cost of the final product. In addition, another disadvantage of this known shell by the Applicant is that the metal reinforcing bars create a bulk inside the rigid body, between its two lateral flanks, with implications for the space available both for the manufacturing and installation of the padded cushion, and also for the installation of a device to drive the selective horizontal movement of the cushion itself and the simultaneous inclination of the backrest associated therewith, with respect to the rigid shell.

A wrap-around seat for motor vehicles, in particular for passenger cars, is known from German patent application DE102012108506, which comprises a metal frame having a zone of the backrest rigidly connected to a zone of the seat's surface, wherein the seat's frame comprises two lateral parts disposed overlapping in a connection region and a seat cushion disposed between the two lateral parts in the seat surface zone, wherein the lateral parts of the seat's frame are created with two or more structural elements which are attached to each other overlapping in a transition zone between the seat surface zone and the backrest zone. However, this known wrap-around seat has the disadvantage of being quite complex and that it can only be used in the automotive sector, in particular as a seat for the driver, or the passenger next to them, and is not suitable or compliant as a seat for passengers of road-rail vehicles for public transport.

A rectangular frame for only the backrest of an automobile seat is known from European patent application EP1057690, which comprises an upper part, two lateral flanks and a lower part, attached to each other by flanges.

A backrest for an automobile seat is known from international patent application WO2013072055, which comprises a laser-tempered zone and a zone weakened by using laser radiation.

A method for reinforcing some parts of a backrest of an automobile seat is known from US patent application US2016221485. All three backrests known from the aforementioned European, international and US patent applications also have the disadvantage of being rather complex to make and that they can only be used in cars, as seat backrests for the driver, or the passenger next to them.

There is therefore the need to further perfect a load-bearing structure of a seat, in particular for passengers, for road-rail vehicles for public transport, that does not have the disadvantages of the state of the art.

To do this, it is necessary to resolve the technical problem of eliminating, or at least limiting as much as possible, the use of different metal components to be mechanically coupled together by means of screws, or suchlike, to create a load-bearing structure of a seat for road-rail vehicles for public transport, while guaranteeing that the load-bearing structure itself has excellent resilience, so that the seat as a whole can fully comply with the provisions of European standards, such as EN 12663 and UNIFE REF 001-2014 for example.

In particular, one purpose of the present invention is to provide a load-bearing structure of a seat for road-rail vehicles for public transport, which is simple to manufacture, relatively light, and at the same time sufficiently robust to safely support the loads required by current standards, and which is reliable for a long period of time.

Another purpose of the present invention is to perfect a method for manufacturing a load-bearing structure of a seat for road-rail vehicles for public transport which is simple to manufacture following processing steps which are also simple and which can be carried out either manually, even by personnel who are not particularly expert, or automatically, for example by means of programmed robots.

Another purpose of the present invention is to manufacture a load-bearing structure of a seat for road-rail vehicles for public transport which then allows the seat as a whole to be very comfortable.

The Applicant has devised, tested and embodied the present invention to overcome the shortcomings of the state of the art and to obtain these and other purposes and advantages.

### SUMMARY OF THE INVENTION

The present invention is set forth and characterized in the independent claims. The dependent claims describe other characteristics of the present invention or variants to the main inventive idea.

In accordance with the above purposes and to resolve the technical problem described above in a new and original way, also achieving considerable advantages compared to the state of the prior art, a load-bearing structure according to the present invention for a seat, in particular for passengers, for road-rail vehicles for public transport, comprises a rigid body having both a lower part, which during use is substantially horizontal and is configured to support a seat bottom of the above mentioned seat, and also an upper part inclined by a certain right or obtuse angle with respect to the above mentioned lower part, and also two lateral flanks, the same as each other and specular with respect to a median longitudinal axis, which affect both the lower part and also the upper part, wherein the two lateral flanks define an internal recess.

In accordance with one aspect of the present invention, the body is in a single piece, manufactured starting from a metal sheet, preferably made of steel, and the load-bearing structure also comprises a plurality of reinforcing elements, also metallic, preferably made of steel, disposed inside the recess and attached to the body only by welding.

This achieves at least the advantage that no mechanical attachment mean is needed to attach the reinforcing elements to the load-bearing structure's body, thus simplifying the assembly steps thereof, with considerable time savings and reduction of production costs.

Furthermore, the load-bearing structure according to the present invention has the advantage of having both a structural as well as an aesthetic function, and of requiring a smaller number of components to be made, compared to the state of the prior art. In fact, after a possible production and painting step, the load-bearing structure is a complete product, to which only the comfort accessories need adding, which are known and are outside the scope of the present invention, such as upholstery, armrests, tables and/or other.

In accordance with another aspect of the present invention, the plurality of reinforcing elements comprises one or more of the following reinforcing elements:
- a first right lateral reinforcing element and a second left lateral reinforcing element, which are shaped so as to have an external profile consistent with that of the internal profiles of the two lateral flanks;
- a third right lateral reinforcing element and a fourth left lateral reinforcing element, which are shaped so as to have an external profile consistent with that of the internal profiles of the two lateral flanks and are configured to reinforce corresponding pivoting zones therein for two armrests of the seat;
- a fifth right lateral reinforcing element and a sixth left lateral reinforcing element which are disposed in the upper part close to the two lateral flanks;
- a seventh upper transverse reinforcing element disposed horizontally in proximity to the highest end of the upper part, between the two lateral flanks;
- an eighth intermediate transverse reinforcing element disposed horizontally just above the third reinforcing element and fourth reinforcing element, between the two lateral flanks;
- two ninth reinforcing elements, the same as each other and disposed horizontally one close to the first reinforcing element and the other close to the second reinforcing element; and
- a tenth reinforcing element, consisting of a metal plate, preferably made of steel, provided with a through hole and disposed in correspondence with a corresponding through hole made in the upper part, preferably in correspondence with the median longitudinal axis.

In accordance with another aspect of the present invention, the first, second, third and fourth reinforcing element are made by molding, preferably cold, a metal sheet, preferably made of steel.

In accordance with another aspect of the present invention, the fifth, sixth, seventh, eighth and ninth reinforcing element are made by shaping and cutting to size a tubular metal section bar, preferably made of steel.

In accordance with another aspect of the present invention, the first reinforcing element and the second reinforcing element each comprise one or more transverse ribs, preferably equidistant from each other.

In accordance with another aspect of the present invention, the two lateral flanks each comprise a through hole configured to accommodate a pin of a corresponding armrest of the seat.

In accordance with another aspect of the present invention, the two lateral flanks have the edges folded inward, each defining an undercut and contributing to forming the recess.

In accordance with another aspect of the present invention, the third reinforcing element and the fourth reinforcing element each comprise a through hole, positioned in correspondence with the through hole present in the corresponding lateral flank.

In accordance with another aspect of the present invention, a seat, in particular for passengers and not for the driver, for road-rail vehicles for public transport, comprises a load-bearing structure according to at least the first of the aspects disclosed above.

In accordance with another aspect of the present invention, a method for manufacturing a load-bearing structure according to at least the first of the aspects disclosed above comprises the following steps:
- a manufacturing step during which the body and the reinforcing elements are manufactured individually, in series or in parallel;
- a welding step during which the reinforcing elements are welded to the body inside the recess; and
- a smoothing step during which at least the zones thermally altered by the welding of the reinforcing elements, which will be visible in the seat, are smoothed.

In accordance with another aspect of the present invention, the above mentioned manufacturing step comprises at least the following sub-steps:
- a first sub-step of molding the body;
- a subsequent second cutting sub-step, during which the scraps are eliminated and a through hole is created in each of the two lateral flanks, configured to accommodate a pin of an armrest of the seat; and
- a subsequent third folding, or flanging, sub-step to create two edges of the two lateral flanks facing inward and each defining an undercut which contributes to forming the recess.

Therefore, the method, or production process, according to the present invention also allows to optimize the manufacturing costs.

### DESCRIPTION OF THE DRAWINGS

These and other aspects, characteristics and advantages of the present invention will become apparent from the following description of an embodiment, given as a non-restrictive example with reference to the attached drawings wherein:
- fig. 1 is a front left three-dimensional view of a load-bearing structure of a seat for road-rail vehicles for public transport according to the present invention;
- fig. 2 is a front right three-dimensional view of the load-bearing structure of fig. 1;
- fig. 3 is a schematic front view of a seat for a means of transport manufactured using a load-bearing structure according to the present invention;
- fig. 4 is a section along line IV-IV of fig. 3;
- fig. 5 is a front view of the load-bearing structure of fig. 1;
- fig. 6 is a top view of the load-bearing structure of fig. 1;
- fig. 7 is a front right three-dimensional view of a rigid body of the load-bearing structure of fig. 1;
- fig. 8 is a left lateral view of the rigid body of fig. 7;
- fig. 9 is a rear view of the rigid body of fig. 7;
- fig. 10 is a three-dimensional view of a first reinforcing element of the load-bearing structure of fig. 1;
- fig. 11 is a three-dimensional view of a second reinforcing element of the load-bearing structure of fig. 1;
- fig. 12 is a three-dimensional view of a third reinforcing element of the load-bearing structure of fig. 1;
- fig. 13 is a three-dimensional view of a fourth reinforcing element of the load-bearing structure of fig. 1;
- fig. 14 is a three-dimensional view of a fifth reinforcing element of the load-bearing structure of fig. 1;
- fig. 15 is a three-dimensional view of a sixth reinforcing element of the load-bearing structure of fig. 1;
- fig. 16 is a three-dimensional view of a seventh reinforcing element of the load-bearing structure of fig. 1;
- fig. 17 is a three-dimensional view of an eighth reinforcing element of the load-bearing structure of fig. 1;
- fig. 18 is a three-dimensional view of a ninth reinforcing element of the load-bearing structure of fig. 1; and
- fig. 19 is a three-dimensional view of a tenth reinforcing element of the load-bearing structure of fig. 1.

We must clarify that by right or left side of the load-bearing structure according to the present invention, and of the corresponding seat, we mean the side that corresponds to a person sitting thereon.

We must also clarify that the drawings are not to scale.

Moreover, we must clarify that the phraseology and terminology used in the present description, as well as the figures in the attached drawings also in relation as to how described, have the sole function of better illustrating and explaining the present invention, their purpose being to provide a non-limiting example of the invention itself, since the scope of protection is defined by the claims.

To facilitate comprehension, the same reference numbers have been used, where possible, to identify identical common elements in the drawings.

### DESCRIPTION OF AN EMBODIMENT OF THE PRESENT INVENTION

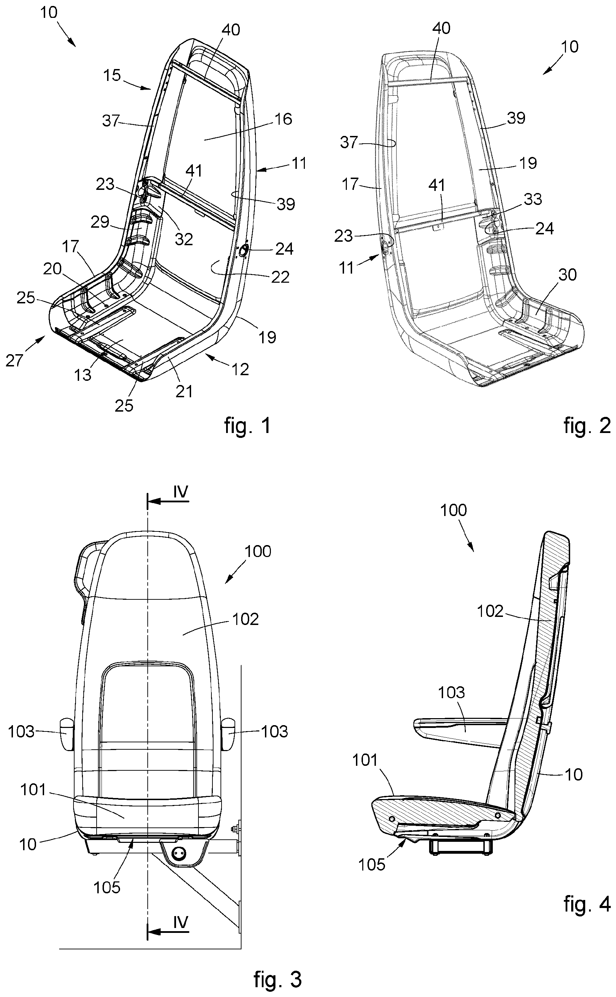

With reference to figs. 1 and 2, a load-bearing structure 10, also called shell, according to the present invention is a rigid type one configured to act as a structural part of a seat 100, schematized in figs. 3 and 4, which in turn is configured to be installed in a road-rail vehicle for public transport, of any known type whatsoever or one that will be developed in the future, and which is not shown here.

We must clarify that the various arrangements in space of the load-bearing structure 10, as well as of its parts and components, mentioned in the present disclosure and in the attached claims, refer, unless otherwise specified, to when the same load-bearing structure 10 has become part of the seat 100, and the latter is in a position of use, installed on a means of transport.

In addition to the load-bearing structure 10 the seat 100 (figs. 3 and 4) comprises a seat bottom 101, for example configured in the form of a padded cushion, a backrest 102, also preferably padded and connected to the seat bottom 101 along two adjacent sides thereof, two armrests 103, one right and one left, and a movement device 105, of a known type, configured to determine the selective horizontal movement of the seat bottom 101 and the simultaneous tilting of the backrest 102, with respect to the load-bearing structure 10.

The load-bearing structure 10 comprises a rigid body 11 (figs. 1, 2, 7, 8 and 9) created with a single molding, preferably cold, of a metal sheet, preferably made of steel, which is relatively thin, for example with a thickness comprised between 1 mm and 1.5 mm.

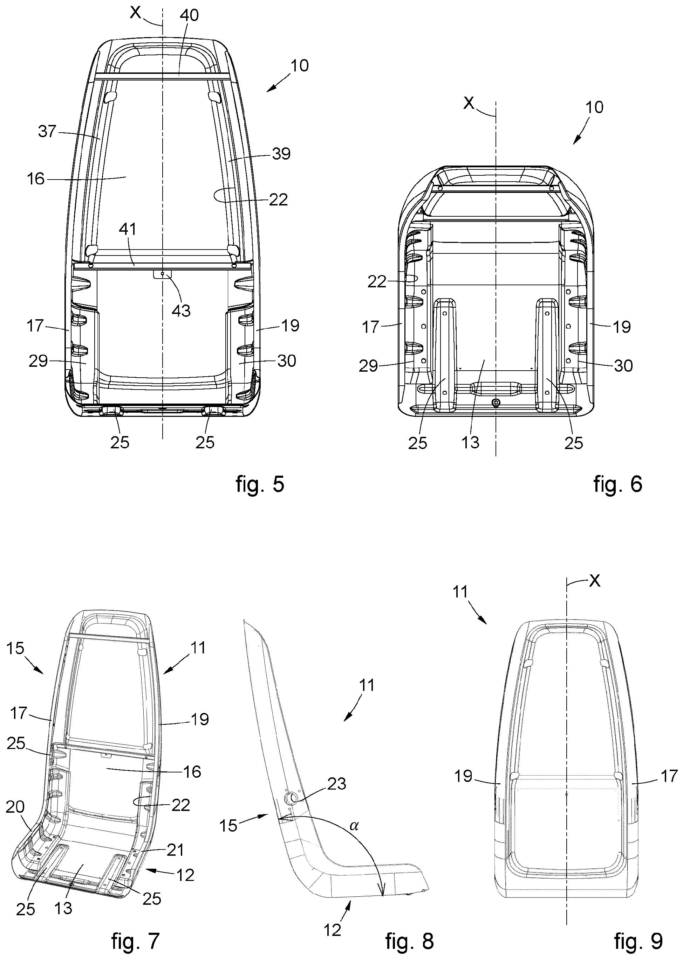

The body 11 has an anatomical shape (figs. 7 and 8), substantially symmetrical with respect to a median longitudinal axis X (figs. 4, 5 and 9) and essentially comprises a lower part 12 (fig. 7), having a flat and substantially square first central zone 13, which during use is substantially horizontal, and an upper part 15 which is connected with a wide radius to the lower part 12 and is tapered upward to define a substantially trapezoidal shape, which is blended on the upper corners (fig. 9). The length of the lower part 12 is greater than the length of the upper part 15.

The upper part 15 is inclined by a certain right or obtuse angle α (fig. 8), preferably comprised between about 95° and about 115°, with respect to the lower part 12 and has a second flat central zone 16 (fig. 7).

The body 11 also comprises two lateral flanks, one right 17 and one left 19 (figs. 1, 2, 5, 6, 7 and 9), which extend along its entire longitudinal extension, in a manner specular with respect to each other and equidistant from the median longitudinal axis X. The two lateral flanks 17 and 19 are disposed substantially perpendicular to the central zones 13 and 16, and are connected thereto with a wide radius. Furthermore, each lateral flank 17 and 19 comprises an edge, right 20 and left 21, respectively, folded inward. In this way, the body 11 comprises a single large recess 22 configured to accommodate a seat bottom 101 and a movement device 105 in the lower part 12, and a backrest 102 of the seat 100 in the upper part 15.

There is a through hole 23 and 24, respectively, on each lateral flank 17 and 19 (figs. 1 and 2), configured to accommodate a pin of a corresponding armrest 103 of a seat 100. There is an additional through hole 25 (fig. 7), smaller than the through holes 23 and 24, in the upper part 15, along the median longitudinal axis X, configured to receive a hooking device, of a known type and not shown in the drawings, which is outside the load-bearing structure 10 and configured so that an object, such as a bag or other, can possibly be hung thereon.

Furthermore, the first central zone 13 comprises two longitudinal ribs 26 (figs. 1, 5, 6 and 7), parallel to the median longitudinal axis X and created during the molding of the body 11, which are configured to support a movement device 105 of the seat 100.

In accordance with one aspect of the present invention, a plurality of reinforcing elements, preferably made of steel, generically indicated with 27 (fig. 1), are welded to the body 11, inside its recess 22, each of them being made separately before being welded to the body 11.

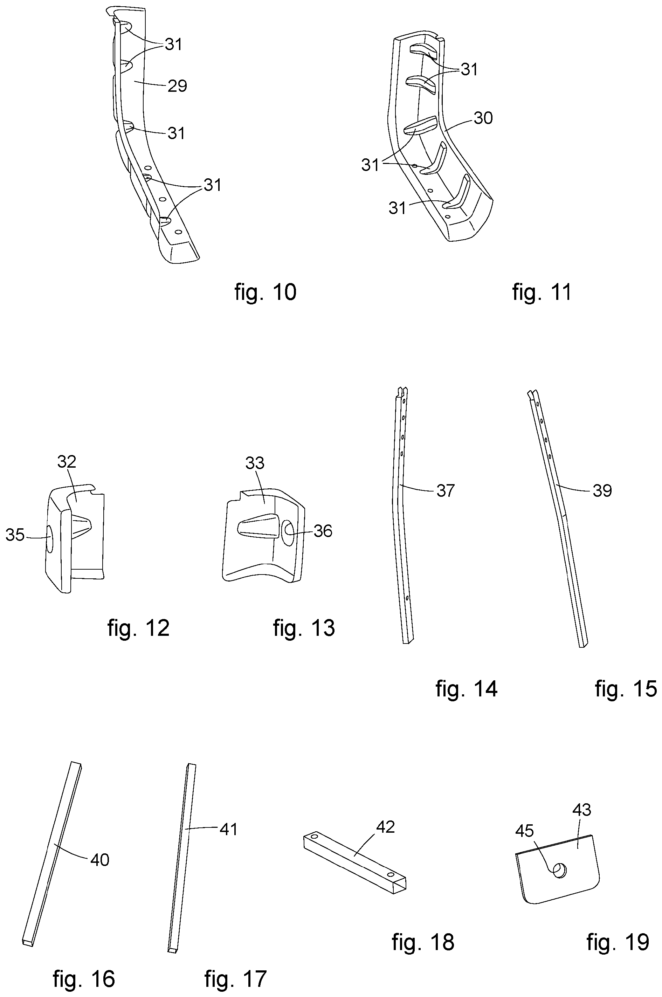

Some embodiments of the present invention provide that one or more of the following reinforcing elements 27, preferably all of them, are welded in the body 11:
- a first right lateral reinforcing element 29 (figs. 1 and 10) and a second left lateral reinforcing element 30 (figs. 2 and 11), which are made by molding a metal sheet, preferably made of steel, and shaped so as to have an external profile consistent with that of the internal profiles of the right 17 and left 19 lateral flank, respectively, and each comprising one or more transverse ribs 31 (figs. 10 and 11), which are five in the example given here, preferably equidistant from each other;
- a third right lateral reinforcing element 32 (figs. 1 and 12) and a fourth left lateral reinforcing element 33 (figs. 2 and 13), which are also made by molding a metal sheet, preferably made of steel, and are shaped so as to have an external profile consistent with that of the internal profiles of the right 17 and left 19 lateral flank, respectively, and are configured to reinforce a pivoting zone of the two armrests 103 of the seat 100. The third reinforcing element 32 and the fourth reinforcing element 33 are each provided with a through hole 35 (fig. 12) and 36 (fig. 13), respectively, positioned in correspondence with the through hole 23 and 24, respectively, present in the lateral flank 17 and 19, respectively;
- a fifth right lateral reinforcing element 37 (figs. 1, 2, 5 and 14) and a sixth left lateral reinforcing element 39 (figs. 1, 2, 5 and 15) which are made by shaping and cutting to size a tubular metal section bar, preferably made of steel, and disposed in the upper part 15 close to the lateral flanks 17 and 19, respectively;
- a seventh upper transverse reinforcing element 40 (figs. 1, 2, 5 and 16) also made by cutting to size a tubular section bar and disposed horizontally in proximity to the highest end of the upper part 15, between the lateral flanks 17 and 19;
- an eighth intermediate transverse reinforcing element 41 (figs. 1, 2, 5 and 17) also made by cutting to size a tubular section bar and disposed horizontally just above the third reinforcing element 32 and fourth reinforcing element 33, between the lateral flanks 17 and 19;
- two ninth reinforcing elements 42 (fig. 18), the same as each other, also made by cutting to size a tubular section bar and disposed horizontally on the first central zone 13, just above the first reinforcing element 29 and the second reinforcing element 30, respectively; and
- a tenth reinforcing element, consisting of a metal plate 43 (fig. 19), preferably made of steel, provided with a through hole 45 and disposed in correspondence with the through hole 25.

It should be noted that, advantageously, all the components of the load-bearing structure 10 are preferably made of steel and that the latter does not comprise any mechanical attachment members, such as screws, bolts, or suchlike, since all the reinforcing elements 27 are welded to the body 11.

The present invention also concerns the method for manufacturing the load-bearing structure 10 described above, which essentially comprises the following three steps:
a) manufacturing the single components individually, in series or in parallel, namely: the body 11 and the reinforcing elements 29, 30, 32 and 33 by molding a metal sheet, preferably made of steel; the reinforcing elements 37, 39, 40, 41 and 42 by cutting metal section bars, preferably made of steel, and possibly shaping them; and the plate 43 by cutting a metal sheet, preferably made of steel;
b) welding the reinforcing elements 27 to the body 11;
c) smoothing the load-bearing structure 10 in the zones thermally altered by the welding and which will be visible in the finished product, that is, in the seat 100.

In particular, the step of manufacturing the body 11 comprises a first sub-step of molding the body 11, a subsequent second cutting sub-step, during which the scraps are eliminated and the three through holes 23, 24 and 25 are created, and a subsequent third folding, or flanging, sub-step to create the two edges 20 and 21 of the flanks 17 and 19 which, since they face inward to form the recess 22, each define an undercut and contribute to forming the recess 22.

We must clarify that the present invention has at least the following advantages compared to the prior art:
- the load-bearing structure 10 is self-supporting and, once the reinforcing elements 27 have been welded to the internal part of the body 11, it does not require additional reinforcements to meet the structural requirements set forth by current regulations. In fact, even in the previous models produced and marketed by the Applicant, internal screwed reinforcements were added in order to ensure compliance with structural requirements. These reinforcements created a bulk inside the body of the load-bearing structure, with implications on the space available to create the padding and to install the movement device to achieve the inclination of the backrest and the forward movement of the seat's cushion;
- the absence of additional mechanically attached internal reinforcements allows to create padding with a greater volume of flexible polyurethane and therefore greater comfort;
- the assembly, since there are no additional reinforcements to insert, is much faster.

Therefore, the load-bearing structure 10, manufactured without using screws, bolts, or other mechanical attachment members, but only using metal components, preferably made of steel, obtained through molding or cutting and/or shaping, and then welded together, is very robust and lightweight and fully complies with current regulations concerning the production of seats for means of transport, in particular for road-rail vehicles, and achieves all the purposes set forth above.

It is clear that modifications and/or additions of parts and/or steps may be made to the load-bearing structure 10 and to the method as described heretofore, without thereby departing from the field and scope of the present invention, as defined by the claims.

It is also clear that, although the present invention has been described with reference to some specific examples, a person of skill in the art will be able to achieve other equivalent forms of load-bearing structures of seats for road-rail vehicles for public transport, having the characteristics as set forth in the claims and hence all coming within the field of protection defined thereby.

In the following claims, the sole purpose of the references in brackets is to facilitate their reading and they must not be considered as restrictive factors with regard to the field of protection defined by the claims.

## Claims

1. Load-bearing structure (10) for a seat (100), in particular for passengers, for road-rail vehicles for public transport, wherein said load-bearing structure (10) comprises a rigid body (11) having both a lower part (12), which during use is substantially horizontal and is configured to support a seat bottom (101) of said seat (100), and also an upper part (15) inclined by a certain right or obtuse angle (α) with respect to said lower part (12), and also two lateral flanks (17, 19), the same as each other and specular with respect to a median longitudinal axis (X), which affect both said lower part (12) and also said upper part (15), wherein said two lateral flanks (17, 19) define an internal recess (22), **characterized in that** said body (11) is in a single piece made starting from a metal sheet, preferably made of steel, and said load-bearing structure (10) also comprises a plurality of reinforcing elements (27), also metallic, preferably made of steel, disposed inside said recess (22) and attached to said body (11) only by welding.

2. Load-bearing structure (10) as in claim 1, **characterized in that** said plurality of reinforcing elements (27) comprises one or more of the following reinforcing elements:
- a first right lateral reinforcing element (29) and a second left lateral reinforcing element (30), which are shaped so as to have an external profile consistent with that of the internal profiles of said two lateral flanks (17, 19);
- a third right lateral reinforcing element (32) and a fourth left lateral reinforcing element (33), which are shaped so as to have an external profile consistent with that of the internal profiles of said two lateral flanks (17, 19) and are configured to reinforce corresponding pivoting zones therein for two armrests (103) of said seat (100);
- a fifth right lateral reinforcing element (37) and a sixth left lateral reinforcing element (39) which are disposed in said upper part (15) close to said two lateral flanks (17, 19);
- a seventh upper transverse reinforcing element (40) disposed horizontally in proximity to the highest end of said upper part (15), between said two lateral flanks (17, 19);
- an eighth intermediate transverse reinforcing element (41) disposed horizontally just above said third reinforcing element (32) and fourth reinforcing element (33), between said two lateral flanks (17, 19);
- two ninth reinforcing elements (42), the same as each other and disposed horizontally just above said first reinforcing element (29) and said second reinforcing element (30), respectively; and
- a tenth reinforcing element, consisting of a metal plate (43), preferably made of steel, provided with a through hole (45) and disposed in correspondence with a corresponding through hole (25) made in said upper part (15), preferably in correspondence with said median longitudinal axis (X).

3. Load-bearing structure (10) as in claim 2, **characterized in that** said body (11) and said first, second, third and fourth reinforcing element (29, 30, 32, 33) are made by molding, preferably cold.

4. Load-bearing structure (10) as in claim 2 or 3, **characterized in that** said fifth, sixth, seventh, eighth and ninth reinforcing element (37, 39, 40, 41, 42) are made by shaping and cutting to size a tubular metal section bar, preferably made of steel.

5. Load-bearing structure (10) as in claim 2, 3 or 4, **characterized in that** said first reinforcing element (29) and said second reinforcing element (30) each comprise one or more transverse ribs (31), preferably equidistant from each other.

6. Load-bearing structure (10) as in any claim hereinbefore, **characterized in that** said two lateral flanks (17, 19) each comprise a through hole (23, 24) configured to accommodate a pin of a corresponding armrest (103) of said seat (100).

7. Load-bearing structure (10) as in claims 2 and 6, **characterized in that** said two lateral flanks (17, 19) have the edges (20, 21) folded inward, each defining an undercut and contributing to forming said recess (22).

8. Seat (100), in particular for passengers, for road-rail vehicles for public transport, **characterized in that** it comprises a load-bearing structure (10) as in any claim hereinbefore.

9. Method for manufacturing a load-bearing structure (10) as in any claim from 1 to 8, **characterized in that** it comprises the following steps:
- a manufacturing step during which both said body (11) and also each of said reinforcing elements (27) are manufactured individually, in series or in parallel;
- a welding step during which said reinforcing elements (27) are welded to said body (11) inside said recess (22); and
- a smoothing step during which at least the zones thermally altered by the welding of said reinforcing elements (27), which will be visible in said seat (100), are smoothed.

10. Method as in claim 9, **characterized in that** said manufacturing step comprises at least the following sub-steps:
- a first sub-step of molding said body (11);
- a subsequent second cutting sub-step, during which the scraps are eliminated and a through hole (23, 24) is created in each of said two lateral flanks (17, 19), configured to accommodate a pin of an armrest (103) of said seat (100); and
- a subsequent third folding, or flanging, sub-step to create two edges (20, 21) of said two lateral flanks (17, 19) facing inward and each defining an undercut which contributes to forming said recess (22).
